# EUROPÄISCHE PATENTSCHRIFT

(11) **EP 4 048 501 B1**
(45) Veröffentlichungstag und Bekanntmachung des Hinweises auf die Patenterteilung: **23.08.2023**
(21) Anmeldenummer: 20793666.7
(22) Anmeldetag: 20.10.2020
(51) Int. Cl.: B29C 49/42, B65G 47/86, B67C 7/00, B67C 3/24

(54) **ZANGEN-SYSTEM UMFASSEND EINEN ZANGENMODULTRÄGER UND EIN ZANGENMODUL ZUR HALTERUNG VON WERKSTÜCKEN**
GRIPPER SYSTEM COMPRISING A GRIPPER MODULE CARRIER AND A GRIPPER MODULE FOR HOLDING WORKPIECES
SYSTÈME PRÉHENSEUR COMPRENANT UN SUPPORT DE MODULE PRÉHENSEUR ET UN MODULE PRÉHENSEUR POUR LE MAINTIEN DE PIÈCES OUVRÉES

(30) Priorität: 21.10.2019 DE 102019128335
(43) Veröffentlichungstag der Anmeldung: 31.08.2022
(73) Patentinhaber: KHS GmbH, 44143 Dortmund (DE)
(72) Erfinder: KLATT, Dieter, 22147 Hamburg (DE); SCHUMACHER, Dirk, 22767 Hamburg (DE)
(74) Vertreter: Greiche, Albert
(86) Internationale Anmeldenummer: PCT/EP2020/079448
(87) Internationale Veröffentlichungsnummer: WO 2021/078713

(56) Entgegenhaltungen:
- EP-B1- 2 114 804
- DE-A1-102008 055 620
- DE-U1- 8 715 816
- US-A1- 2011 064 555
- US-A1- 2011 089 003

## Beschreibung

Die Erfindung betrifft ein Zangen-System umfassend einen Zangenmodulträger und ein Zangenmodul zur Halterung von Werkstücken.

Behälter, insbesondere Behälter aus Kunststoff, können mittels Blasformung oder hydraulischer Formung hergestellt werden. Um große Stückzahlen zu produzieren, werden Rotationsmaschinen genutzt. Dabei wird nacheinander eine Vielzahl von Kunststoff-Vorformlingen an eine Vielzahl von Formvorrichtungen übergeben, die mit einem Rotorabschnitt der Rotationsmaschine, z. B. einem Blasrad oder einem Füllrad, verbunden sind. Zur Übergabe der Vorformlinge an die Rotationsmaschine bzw. zur Abnahme der Behälter von der Rotationsmaschine können die Behälter oder Vorformling mit Zangen gegriffen bzw. bereitgestellt werden. Die Zangen greifen die Behälter oder Vorformlinge dabei in deren Halsbereich.

Aus EP 2 114 804 B1 ist dabei eine Vorrichtung zur Blasformung von Behältern mit einem Handhabungselement zur Halterung von Vorformlingen oder Behältern, wobei das Handhabungselement zangenartig ausgebildet und mit zwei Zangenarmen versehen ist, bekannt. Dazu wird eine einteilige Konstruktion des zangenartigen Halterungselements bereitgestellt, das mit einer Federzunge an einem Grundelement befestigt wird, das an einem Tragarm der Rotationsmaschine angeordnet ist. Dabei besteht der Bedarf, einen schnellen Wechsel der Handhabungselemente bereitzustellen, insbesondere, wenn ein Produktwechsel ansteht, d. h., wenn Produkte mit anderen Halsweiten hergestellt werden sollen. Weitere derartige Zangen-Systeme sind in den Patentschriften US2011/064555A1 und DE102008055620A1 beschrieben.

Aufgabe der Erfindung ist es daher, eine Vorrichtung bereitzustellen, mit der ein schneller Wechsel der Handhabungselemente durchgeführt werden kann.

Die Aufgabe wird gelöst durch die Merkmale der unabhängigen Ansprüche. Vorteilhafte Weiterbildungen sind Gegenstand der abhängigen Ansprüche sowie der folgenden Beschreibung.

Bei einem Zangen-System umfassend einen Zangenmodulträger und ein Zangenmodul zur Halterung von Werkstücken, insbesondere von Behältern oder Behälter-Vorformlingen, wobei das Zangenmodul eine Zangenbasis und zwei relativ zueinander schwenkbar an der Zangenbasis gelagerte Zangenarme mit Greifelementen zum zumindest teilweisen Umgreifen eines Haltebereiches von Behältern oder Behälter-Vorformlingen aufweist, wobei das Zangenmodul lösbar mit dem Zangenmodulträger verbindbar ist, ist erfindungsgemäß vorgesehen, dass das Zangen-System weiter eine Arretiervorrichtung zum Arretieren des Zangenmoduls an dem Zangenmodulträger aufweist, wobei die Arretiervorrichtung in eine Arretierstellung zur Arretierung des Zangenmoduls an dem Zangenmodulträger bringbar ist, und wobei die Arretiervorrichtung in eine Freigabestellung bringbar ist, zur Freigabe des Zangenmoduls aus der Arretierung an dem Zangenmodulträger, wobei die Arretiervorrichtung einen Spannhebel umfasst, der zur Betätigung der Arretiervorrichtung in die Arretierstellung und die Freigabestellung schwenkbar ist.

Mit der Erfindung wird ein modulares Zangen-System bereitgestellt, das einen Zangenmodulträger und ein Zangenmodul aufweist. Der Zangenmodulträger kann dabei zum Beispiel zum Befestigen an einem Tragarm ausgebildet sein. Der Tragarm kann zum Beispiel Bestandteil einer Vorrichtung zum Herstellen von Behältern sein. Alternativ kann der Zangenmodulträger jedoch auch integral mit einem Tragarm verbunden sein. Das Zangenmodul weist die Greifelemente auf, um die Werkstücke in einem Haltebereich eines Werkstücks zu halten. Der Haltebereich kann zum Beispiel ein Halsbereich eines Behälter-Vorformlings oder eines Behälters sein. Der Halsbereich kann dabei oberhalb eines Stützrings am Behälter oder Behälter-Vorformling angeordnet sein und als Kerbe unterhalb eines Gewindes für einen Schraubverschluss ausgebildet sein. Weiter wird das Zangenmodul über eine Arretiervorrichtung mit dem Zangenmodulträger verbunden. Die Arretiervorrichtung weist dazu eine Arretierstellung und eine Freigabestellung auf. In der Arretierstellung arretiert die Arretiervorrichtung das Zangenmodul an dem Zangenmodulträger, wenn das Zangenmodul mit dem Zangenmodulträger verbunden ist. So kann die Arretiervorrichtung zum Beispiel eine Spannvorrichtung arretieren, die das Zangenmodul an dem Zangenmodulträger verspannt. In der Freigabestellung gibt die Arretiervorrichtung das Zangenmodul frei, sodass das Zangenmodul von dem Zangenmodulträger getrennt oder mit dem Zangenmodulträger verbunden werden kann. Mit der Arretiervorrichtung kann das Zangenmodul daher ohne großen Zeitaufwand mit dem Zangenmodulträger verbunden und von ihm getrennt werden. Damit kann ein schneller Wechsel des Zangenmoduls durchgeführt werden, sodass bei einem Produktwechsel, bei dem zum Beispiel Behälter mit anderer Halsweite im Haltebereich hergestellt werden sollen, eine Vielzahl von Zangenmodulen in kurzer Zeit gewechselt werden kann. Weiter wird mit der Arretiervorrichtung eine spielfreie Verbindung zwischen dem Zangenmodul und dem Zangenmodulträger bereitgestellt.

Gemäß einem Beispiel kann die Arretiervorrichtung werkzeuglos in die Arretierstellung und in die Freigabestellung bringbar sein.

Damit kann die Arretiervorrichtung von einem Nutzer per Hand betätigt werden. Aufgrund der werkzeuglosen Betätigbarkeit wird der Zeitaufwand für die Befestigung bzw. die Lösung des Zangenmoduls und damit einem Wechsel des Zangenmoduls weiter verringert.

Weiter kann die Arretiervorrichtung zum Beispiel einen nach dem Kniehebelprinzip arretierenden Verschlussmechanismus aufweisen.

Damit wird die manuelle Betätigung der Arretiervorrichtung vereinfacht, da durch das Kniehebelprinzip eine wenig Kraft aufgewendet werden muss, wobei jedoch eine hohe Sicherheit der Arretierung ermöglicht wird.

Gemäß einem weiteren Beispiel kann die Arretiervorrichtung als Spannverschluss ausgebildet sein.

Die Betätigung der Arretiervorrichtung wird damit weiter beschleunigt, da lediglich ein Spannhebel des Spannverschlusses verschwenkt werden muss, um die Arretiervorrichtung von der Freigabestellung in die Arretierstellung bzw. von der Arretierstellung die Freigabestellung zu überführen.

In einem weiteren Beispiel kann die Arretiervorrichtung einen, insbesondere als Haken, Bügel oder Schlaufe ausgebildeten, zugfest mit dem Zangenmodulträger oder mit dem Zangenmodul verbundenen ersten Haltepartner und einen passend zum ersten Haltepartner, insbesondere als Haken, Schlaufe oder Bügel ausgebildeten, zugfest mit dem Zangenmodul oder mit dem Zangenmodulträger verbundenen zweiten Haltepartner aufweist, wobei der erste Haltepartner und der zweite Haltepartner in der Arretierstellung zur Herstellung einer zugfesten Verbindung formschlüssig zusammenwirken, und in der Freigabestellung voneinander gelöst sind.

Mit der Arretiervorrichtung, die den ersten Haltepartner aufweist, das mit dem zweiten Haltepartner zusammenwirken kann, wird eine Verspannung des Zangenmoduls an dem Zangenmodulträger auf einfache Weise bewirkt. Weiter wird die Sicherheit der Verbindung zwischen dem Zangenmodul und dem Zangenmodulträger in der Arretierstellung erhöht.

Gemäß einem weiteren Beispiel können der Spannhebel sowie der erste Haltepartner mit dem Zangenmodulträger verbunden und der zweite Haltepartner mit dem Zangenmodul verbunden sein.

Der Zangenmodulträger kann zum Beispiel einen Spannhebel mit einer Schlaufe als ersten Haltepartner aufweisen, wobei das Zangenmodul in diesem Beispiel als zweiten Haltepartner einen Haken aufweist. Der Spannhebel mit der Schlaufe verbleibt damit an dem Zangenmodulträger, wenn das Zangenmodul von dem Zangenmodulträger entfernt wird. Das Zangenmodul weist damit lediglich den Haken auf, der einfach und relativ kostengünstig ausgebildet werden kann. Der im Vergleich dazu kostenintensive Spannhebel muss damit nicht an jedem Zangenmodul angeordnet werden, wobei beispielsweise bei verschieden ausgebildeten Haltebereichen die Anzahl der Zangenmodule z. B. aufgrund verschiedener Halsweiten der Werkstücke deutlich größer sein kann als die Anzahl der Zangenmodulträger. Die Anzahl der kostenintensiven Spannhebel wird damit auf die Anzahl der Zangenmodulträger begrenzt, von denen an einer entsprechenden Herstellvorrichtung in der Regel signifikant weniger vorhanden sind als Zangenmodule. Es sei jedoch damit nicht ausgeschlossen, dass der Haken am Zangenmodulträger und der Spannhebel mit der Schlaufe an dem Zangenmodul befestigt ist.

Gemäß einem weiteren Beispiel kann die die Arretiervorrichtung ein in eine Verriegelungsstellung und in eine Entriegelungsstellung bringbares Verriegelungselement aufweist, wobei das Verriegelungselement in der Verriegelungsstellung die Arretiervorrichtung in der Arretierstellung verriegelt und in der Entriegelungsstellung die Arretiervorrichtung entriegelt, so dass die Arretiervorrichtung aus der Arretierstellung in die Freigabestellung bringbar ist.

Die Arretiervorrichtung kann daher mittels des Verriegelungselements in der Arretierstellung verriegelt und damit gesichert werden. Bevor die Arretiervorrichtung von der Arretierstellung in die Freigabestellung bewegt werden kann, muss zunächst das Verriegelungselement von der Verriegelungsstellung in die Entriegelungsstellung überführt werden. Ein versehentliches Bewegen der Arretiervorrichtung in die Freigabestellung wird damit vermieden. Dies erhöht die Sicherheit der Befestigung zwischen dem Zangenmodul und den Zangenmodulträger.

Dazu kann das Verriegelungselement beispielsweise einen Daumenhebel zum Bewegen des Verriegelungselements zwischen der Verriegelungsstellung und der Entriegelungsstellung aufweisen.

Mit dem Daumenhebel kann ein Nutzer das Verriegelungselement auf einfache Weise mit einer einzigen Hand zwischen der Verriegelungsstelle und der Entriegelungsstellung bewegen. Damit wird die Handhabung vereinfacht und lediglich ein geringer Zeitaufwand für das Bewegen des Verriegelungselements zwischen der Entriegelungsstellung und der Entriegelungsstellung benötigt.

Weiter ist bei einem Zangen-System umfassend einen Zangenmodulträger und ein Zangenmodul zur Halterung von Werkstücken, insbesondere von Behältern oder Behälter-Vorformlingen, wobei das Zangenmodul eine Zangenbasis und zwei relativ zueinander schwenkbar an der Zangenbasis gelagerte Zangenarme mit Greifelementen zum zumindest teilweisen Umgreifen eines Haltebereiches von Behältern oder Behälter-Vorformlingen aufweist, wobei das Zangenmodul lösbar mit dem Zangenmodulträger verbindbar ist, erfindungsgemäß vorgesehen, dass das Zangen-System weiter eine Arretiervorrichtung zum Arretieren des Zangenmoduls an dem Zangenmodulträger aufweist, wobei die Arretiervorrichtung in eine Arretierstellung zur Arretierung des Zangenmoduls an dem Zangenmodulträger bringbar ist, und wobei die Arretiervorrichtung in eine Freigabestellung bringbar ist, zur Freigabe des Zangenmoduls aus der Arretierung an dem Zangenmodulträger, wobei die Arretiervorrichtung einen Rastbolzen umfasst, der zur Betätigung der Arretiervorrichtung in die Arretierstellung und die Freigabestellung bewegbar ist.

Mit dem Rastbolzen wird ein Zangen-System bereitgestellt, mit dem auf einfache Weise ein schneller Wechsel des Zangenmoduls am Zangenmodulträger durchgeführt werden kann. Zum Trennen des Zangenmoduls von dem Zangenmodulträger reicht es aus, den Rastbolzen in die Freigabestellung zu bewegen. Damit ist das Zangenmodul frei und kann von dem Zangenmodulträger getrennt werden. Zum Verbinden kann das Zangenmodul mit dem Zangenmodulträger verbunden werden, wenn der Rastbolzen in die Freigabestellung gebracht wird. Zum Arretieren der Verbindung zwischen dem Zangenmodul und dem Zangenmodulträger wird der Rastbolzen in die Arretierstellung bewegt.

Gemäß einem Beispiel kann der Rastbolzen an dem Zangenmodulträger oder dem Zangenmodul verschiebbar gelagert sein und sich in der Arretierstellung in eine Bohrung, die am Zangenmodul oder am Zangenmodulträger angeordnet ist, erstrecken, um das Zangenmodul formschlüssig an dem Zangenmodulträger zu arretieren.

Damit wird ein einfach herzustellende und zu betätigende Arretiervorrichtung bereitgestellt

Weiter kann beispielsweise die Arretiervorrichtung ein Federelement aufweisen, das den Rastbolzen federvorgespannt in die Arretierstellung zwingt.

Der Rastbolzen kann zum Beispiel federvorgespannt sein.

Aufgrund der Vorspannung wird der Rastbolzen in die Arretierstellung gezwungen, wenn der Rastbolzen sich nicht in der Arretierstellung befindet und ihn keine äußeren Kräfte daran hindern. Ein Nutzer kann eine äußere Kraft bewirken und den Rastbolzen entgegen der Federvorspannung in die Freigabestellung bewegen, um danach das Zangenmodul mit dem Zangenmodulträger zu verbinden. Nach dem Verbinden des Zangenmoduls mit dem Zangenmodulträger kann der Nutzer den Rastbolzen loslassen, sodass der Rastbolzen aufgrund der Federvorspannung automatisch in die Arretierstellung bewegt wird. Damit wird lediglich ein geringer Zeitaufwand benötigt, um das Zangenmodul von dem Zangenmodulträger zu lösen oder mit dem Zangenmodulträger zu verbinden.

Das Zangen-System kann gemäß einem weiteren Beispiel mindestens eine Positioniereinrichtung zum Ausrichten des Zangenmoduls an dem Zangenmodulträger aufweist.

Eine Ausrichtung des Zangenmoduls vereinfacht die Verwendung einer Transportvorrichtung für Behälter oder Behälter-Vorformlinge, da das Zangenmodul eine definierte Position aufweist, an die ein Behälter oder Behälter Vorformling übergeben oder entnommen werden kann. Dies erhöht die maximal mögliche Geschwindigkeit für den Betrieb der Transportvorrichtung, da eine Justierung beim Übergeben der Behälter oder Behälter-Vorformlinge minimiert wird.

Weiter kann die Positioniereinrichtung in einem weiteren Beispiel mindestens einen Vorsprung und mindestens eine zu dem mindestens einen Vorsprung passend ausgebildete Ausnehmung zum Aufnehmen des Vorsprungs aufweisen, wobei der Vorsprung an dem Zangenmodulträger oder dem Zangenmodul befestigt ist und die Ausnehmung an dem Zangenmodul oder dem Zangenmodulträger angeordnet ist.

Damit wird eine Positioniereinrichtung bereitgestellt, die einfach herzustellen und einfach zu verwenden ist.

Gemäß einem weiteren Beispiel kann die mindestens eine Positioniereinrichtung weiter ein Zentrierelement zum Zentrieren des Zangenmoduls an dem Zangenmodulträger aufweisen.

Damit kann die Position des Zangenmoduls an dem Zangenmodulträger mittels des Zentrierelements bestimmt werden. Es wird dabei eine Positionierung des Zangenmoduls vor allem in vertikaler Richtung bewirkt, so dass alle Zangenmodule einer Transportvorrichtung in einer gemeinsamen, vorzugsweise horizontalen, Ebene angeordnet sind. Mit der korrekten Position des Zeugenmoduls an dem Zangenmodulträger kann das Zangenmodul gleichzeitig so angeordnet werden, dass die Arretiervorrichtung korrekt bedient werden kann.

In einem Beispiel kann die Positioniereinrichtung korrespondierende Anlage-/Gleitbereiche aufweisen, die eine zwangsgeführte Positionierung des Zangenmoduls an dem Zangenmodulträger bewirken, um in die vordefinierte Verbindungsstellung zu gelangen, in der die Arretiervorrichtung greifen kann.

Das Zentrierelement kann beispielsweise mindestens einen Vorsprung an dem Zangenmodulträger und mindestens eine zu dem mindestens einen Vorsprung passend ausgebildete an dem Zangenmodul angeordnete Ausnehmung zum Aufnehmen des Vorsprungs aufweisen.

Mit dem Vorsprung in Kombination mit der Ausnehmung wird ein einfach herzustellendes Zentrierelement bereitgestellt, wobei das Zentrierelement effektiv eine Zentrierung des Zangenmoduls an dem Zangenmodulträger bewirkt.

Weiter kann das Zentrierelement eine doppelte Funktion aufweisen. In einer ersten Funktion kann das Zentrierelement als Anschlag für einen Tragarm fungieren, um eine Positionierung des Zangenträgermoduls an einem Tragarm einer Vorrichtung zum Transportieren eines Behälters oder Behälter-Vorformlings zu bewirken. In einer zweiten Funktion kann das Zentrierelement eine Zentrierung des Zangenmoduls an dem Zangenträgermodul bewirken, indem das Zangenmodul mit der Ausnehmung so angeordnet werden muss, dass die Zentriereinrichtung in die Ausnehmung eingeführt werden kann. Die Ausnehmung kann dabei als Passfedernut ausgebildet sein, die für eine Verbindung des Zangenmoduls an dem Zangenmodulträger passend zum Zentrierelement ausgerichtet werden muss.

Der Vorsprung kann beispielsweise eine Nase sein und das Zangenmodul eine Aufnahme zum Aufnehmen zumindest eines Teils des Zangenmodulträgers aufweisen, wobei die Ausnehmung in der Aufnahme angeordnet ist.

Unter einer Nase kann dabei zum Beispiel ein Vorsprung verstanden werden, der sich mit einer gebogenen Außengrenzfläche von dem Zangenträgermodul weg erstreckt. Das Spiel zwischen dem Zangenmodul und dem Zangenmodulträger wird damit weiter verringert.

Der Vorsprung kann in einem weiteren Beispiel eine Führungsschiene sein und die Aufnahme entlang der Führungsschiene bewegbar sein.

Mit der Führungsschiene kann eine geführte Bewegung zum Verbinden des Zangenmoduls und des Zangenmodul Trägers bereitgestellt werden. Dies kann die Handhabung des Zangen-Systems weiter erleichtern.

Weiter kann das Zentrierelement als ein Federblech ausgebildet sein, dass über eine Federkraft das Zangenmodul in eine vordefinierte Position bringt.

Weiter kann sich das Zentrierelement beispielsweise in der Arretierstellung in einer Richtung parallel zu den Zangenarmen zwischen dem Zangenmodulträger und dem Zangenmodul erstrecken.

In diesem Beispiel kann das Zentrierelement zum Beispiel ein Dorn an dem Zangenmodulträger sein, der sich in eine Ausnehmung in dem Zangenmodul hinein erstreckt, wenn das Zangenmodul mit dem Zangenmodulträger verbunden wird. Dabei erstreckt sich das Zentrierelement in diesem Beispiel entlang einer Linie, die zwischen den Zangenarmen und dem Zangenmodulträger in der Arretierstellung verläuft. Damit wird eine sichere Halterung des Zangenmoduls an dem Zangenmodulträger und eine einfache Zentrierung bereitgestellt.

Weiter betrifft die Erfindung eine Vorrichtung zum Transportieren eines Behälters oder Vorformlings, wobei die Vorrichtung eine Vielzahl von Tragarmen und eine Vielzahl von Zangen-Systemen nach einem der vorangegangenen Ansprüche aufweist, wobei vorgesehen ist, dass jeder Tragarm mit einem Zangenmodulträger verbunden ist.

Vorteile und Wirkungen sowie Weiterbildungen der Vorrichtung ergeben sich aus den Vorteilen und Wirkungen sowie Weiterbildungen des oben beschriebenen Zangen-Systems. Es wird daher in dieser Hinsicht auf die vorangegangene Beschreibung verwiesen.

Im Folgenden wird die Erfindung anhand einer beispielhaften Ausführungsform mittels der beigefügten Zeichnung beschrieben. Es zeigen:
Figur 1 eine schematische Darstellung einer Vorrichtung zum Transportieren oder Herstellen eines Behälters oder Vorformlings,
Figur 2 eine schematische Darstellung des Zangen-Systems,
Figur 3a, b eine schematische Darstellung der Module des Zangen-Systems,
Figur 4a-d eine schematische Darstellung eines Beispiels des Zangen-Systems,
Figur 5a, b eine schematische Darstellung eines ersten weiteren Beispiels des Zangen-Systems, und
Figur 6a, b eine schematische Darstellung eines zweiten weiteren Beispiels des Zangen-Systems.

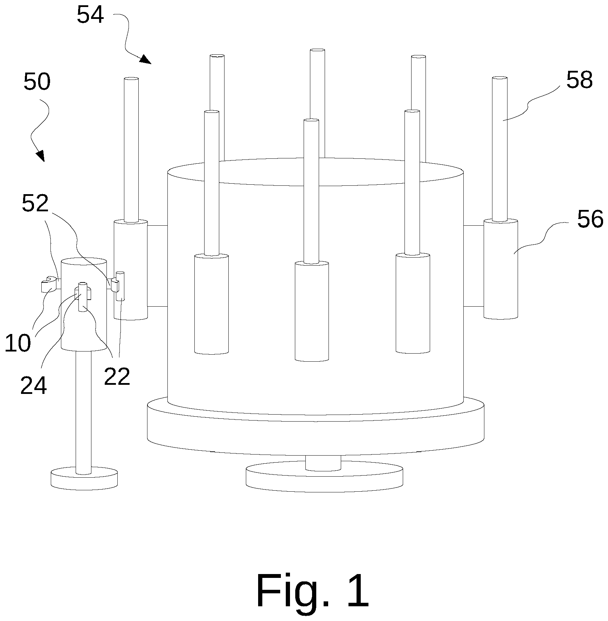

Figur 1 zeigt eine Vorrichtung 50 zum Transportieren von Behältern oder Behälter-Vorformlingen, die Teil einer Vorrichtung 54 zum Herstellen von Behältern aus Behälter-Vorformlingen sein kann.

In diesem Beispiel sind die Werkstücke 22 Behälter-Vorformlinge zum Herstellen von Behältern, die von der Vorrichtung 50 zum Transportieren zu der Vorrichtung 54 zum Herstellen von Behältern transportiert und übergeben werden. Für den Transport weist die Vorrichtung 50 eine Vielzahl von Tragarmen 52 auf. Mit jedem der Tragarme 52 ist ein Zangen-System 10 verbunden, wobei das Zangen-System 10 in diesem Beispiel an einem von der Vorrichtung 50 wegweisenden Endstücks der Tragarme 52 mit den Tragarmen 52 verbunden ist.

Die Werkstücke 22 werden dabei von dem Zangen-System 10 in einem Halsbereich 24 der Werkstücke 22 gegriffen.

Die Zangen-Systeme 10 können separat von den Tragarmen 52 sein oder integral mit dem Tragarmen 52 verbunden sein.

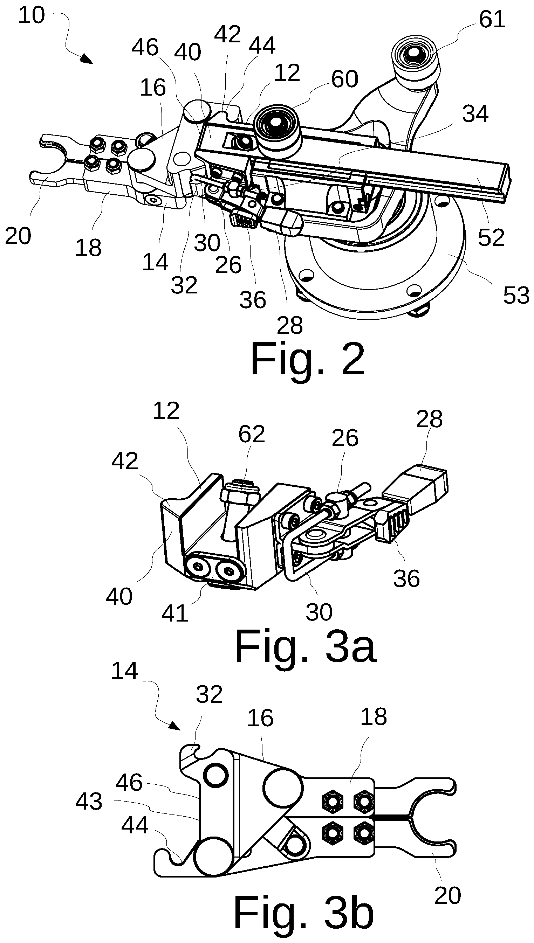

In Figur 2 ist ein Zangen-System 10 dargestellt, das einen Zangenmodulträger 12 und ein Zangenmodul 14 umfasst. Der Zangenmodulträger 12 ist über eine Arretiervorrichtung 26 mit dem Zangenmodul 14 verbunden. Der Zangenmodulträger 12 ist an einem der Tragarme 52 befestigt. In diesem Beispiel ist der Zangenmodulträger 12 an dem Endstück des Tragarms 52 angeordnet, das im eingebauten Zustand von der Vorrichtung 50 zum Transportieren wegweist.

Das Zangenmodul 14 ist mit dem Zangenmodulträger 12 verbunden. Dabei weist das Zangenmodul 14 Zangenarme 18 auf, die mit einer Zangenbasis 16 verbunden sind. Die Zangenbasis 16 ist zwischen den Zangenarmen 18 und dem Zangenmodulträger 12 angeordnet. Weiter ist der Zangenmodulträger 12 zwischen dem Zangenmodul 14 und dem Tragarm 52 angeordnet.

An den Zangenarmen 18 sind Greifelemente 20 angeordnet, mit denen ein Werkstück 22, in diesem Beispiel ein Behälter-Vorformling oder Behälter mit einer definierten Halsweite, in einem Haltebereich gegriffen werden kann. Die Zangenarme 18 können dabei geöffnet und geschlossen werden. Bei dieser Öffnung bzw. Schließbewegung werden die Greifelemente 20 ebenfalls geöffnet und geschlossen.

Die Verbindung zwischen dem Zangenmodulträger 12 und dem Zangenmodul 14 erfolgt mittels einer Arretiervorrichtung 26. Die Arretiervorrichtung 26 weist dazu an der Zangenbasis 16 des Zangenmoduls 14 einen Haken auf. Der Haken kann von einer Schlaufe 30 umfasst werden, die über einen Spannhebel 28 mit dem Zangenträgermodul 12 verbunden ist. Die Schlaufe und der Haken bilden dabei einen ersten Haltepartner 30 und einen zweiten Haltepartner 32, die in der Arretierstellung zur Herstellung einer zugfesten Verbindung zwischen dem Zangenmodul 14 und dem Zangenmodulträge 12 formschlüssig zusammenwirken. Die Arretiervorrichtung 26 ist damit werkzeuglos von Hand betätigbar. Anstatt einer Schlaufe kann als einer der Haltepartner 30, 32 ebenfalls ein Bügel vorgesehen werden.

Das Zangenmodul 14 wird dabei von einer Positioniereinrichtung 40 in einer vordefinierten Position angeordnet, wenn das Zangenmodul 14 mit dem Zangenmodulträger 12 verbunden wird.

In diesem Beispiel umfasst die Positioniereinrichtung 40 ein Vorsprung 42, der sich seitlich von dem Zangenmodulträger 12 weg erstreckt. Der Vorsprung 42 wird von einer Ausnehmung 44 am Zangenmodul 14 aufgenommen und zentriert das Zangenmodul 14 an dem Zangenmodulträger 12 in horizontaler Richtung. Weiter umfasst das Zangenmodul 14 an der Zangenbasis 16 eine Aufnahme 46, die ein Teil des Zangenmodulträgers 12 aufnimmt und ebenfalls Teil des Zentrierelements 40 sein kann.

Die Positioniereinrichtung 40 umfasst weiter ein Zentrierelement 41 mit einer Doppelfunktion, das als Anschlagplatte ausgebildet ist. In einer ersten Funktion stellt das Zentrierelement 41 einen Anschlag bei der Befestigung des Zangenmodulträgers 12 an einem Tragarm 52 dar. Der Zangenmodulträger 52 wird dabei so an einem Tragarm 52 positioniert, dass der Tragarm 52 an das Zentrierelement 41 anschlägt.

In der zweiten Funktion zentriert das Zentrierelement 41 das Zangenmodul 14 beim Verbinden des Zangenmoduls 14 mit dem Zangenmodulträger 12. Dazu weist das Zangenmodul 14 eine Ausnehmung 43 auf, die als Passfedernut ausgebildet ist und das Zentrierelement 41 aufnehmen kann, d. h. zur Aufnahme des Zentrierelements 41 ausgebildet ist. Die Ausnehmung 43 wird über das Zentrierelement 41 geführt, wenn das Zangenmodul 14 an den Zangenmodulträger 12 angekoppelt wird. Dabei zentriert das Zentrierelement 41 das Zangenmodul 14.

Der Tragarm 52 kann entlang seiner Längserstreckung gleitend an einem Halteelement 53 gelagert sein. Weiter kann der Tragarm 52 Laufrollen 60 und 61 aufweisen, die mit einer Kurvensteuerung der Vorrichtung 50 zusammenwirken können. Mit der Laufrolle 60 kann mittels einer Kurvensteuerung der Tragarm 52 entlang seiner Längserstreckung verschoben werden. Dies bewirkt gleichzeitig ein Verschieben des Zangen-Systems 10, so dass mit der Laufrolle 60 das Zangen-System 10 entlang der Längserstreckung des Tragarms 52 nach vorne und nach hinten bewegt werden kann, um eine Greifbewegung zu unterstützen.

Mit der Laufrolle 61 kann mittels einer weiteren Kurvensteuerung ein Schwenken des Tragarms 52 und des Zangen-Systems 10 bewirkt werden. Das Zangen-System 10 kann damit verschwenkt werden, um eine Greifbewegung zu unterstützen oder um Hindernissen auszuweichen.

Der Zangenmodulträger 12 ist in Figur 3a näher dargestellt. Der Zangenmodulträger 12 umfasst dabei ein Befestigungselement 62, mit dem der Zangenmodulträger 12 mit dem Tragarm 52 verbunden werden kann. An einer Seitenfläche des Zangenmodulträger 12 ist ein Teil der Arretiervorrichtung 26 angeordnet.

Die Arretiervorrichtung 26 umfasst dabei einen Spannhebel 28, der verschwenkbar mit dem Zangenmodulträger 12 verbunden ist. Der Spannhebel 28 und damit die Arretiervorrichtung 26 kann dabei zwischen einer Arretierstellung und einer Freigabestellung bewegt werden.

Weiter ist ein Daumenhebel 36 an dem Spannhebel 28 dargestellt. Der Daumenhebel 36 dient zur Einhand-Betätigung eines Verriegelungselements 34 zum Verriegeln des Spannhebels 28 in der Arretierstellung. Dabei weist das Verriegelungselement 34 eine Verriegelungsstellung zum Verriegeln der Arretiervorrichtung 26 in der Arretierstellung auf. In einer Entriegelungsstellung entriegelt das Verriegelungselement 34 die Arretiervorrichtung 26, wenn die Arretiervorrichtung 26 in der Arretierstellung ist.

Weiter umfasst die Arretiervorrichtung 26 eine Schlaufe als ersten Haltepartner 30, die um eine Drehachse drehbar mit dem Spannhebel 28 verbunden ist.

Auf der gegenüberliegenden Seite zum Spannhebel 28 umfasst der Zangenmodulträger 12 einen Vorsprung 32, der als Nase ausgebildet ist, die sich seitlich von dem Zangenmodulträger 12 weg erstreckt. Der Vorsprung ist dabei ein Teil eines Zentrierelements 40, mit dem die Position eines Zangenmoduls 14, das mit dem Zangenmodulträger 12 verbunden wird, in eine vordefinierte Position bewegt werden kann.

Dabei ist das Zangenmodul 14 in Figur 3b dargestellt. An der Zangenbasis 16 ist ein Haken als zweiter Haltepartner 32 vorgesehen, der mit der Schlaufe des Zangenmodulträgers 12 zusammenwirken kann. Dabei kann die Schlaufe in den Haken eingehakt oder ausgehakt werden, wenn das Zangenmodul 14 mit dem Zangenmodulträger 12 verbunden ist und die Arretiervorrichtung 26 in der Freigabestellung ist.

Auf der gegenüberliegenden Seite, an der der Haken 32 angeordnet ist, umfasst die Zangenbasis 16 die Ausnehmung 44, mit der der Vorsprung 42 des Zangenmodulträgers 12 aufgenommen werden kann. Weiter umfasst die Zangenbasis 16 eine Aufnahme 46, mit der der Zangenmodulträger 12 zum Teil aufgenommen werden kann. Die die Ausnehmung 44 kann dabei ein Teil der Aufnahme 46 sein.

An der Zangenbasis 16 sind zwei Zangenarme 18 schwenkbar verbunden. Die Zangenarme 18 umfassen weiter Greifelemente 20, wobei die Greifelemente 20 der beiden Zangenarme 18 zusammenwirken können, um einen Haltebereich 24 eines Werkstücks 22 zu greifen.

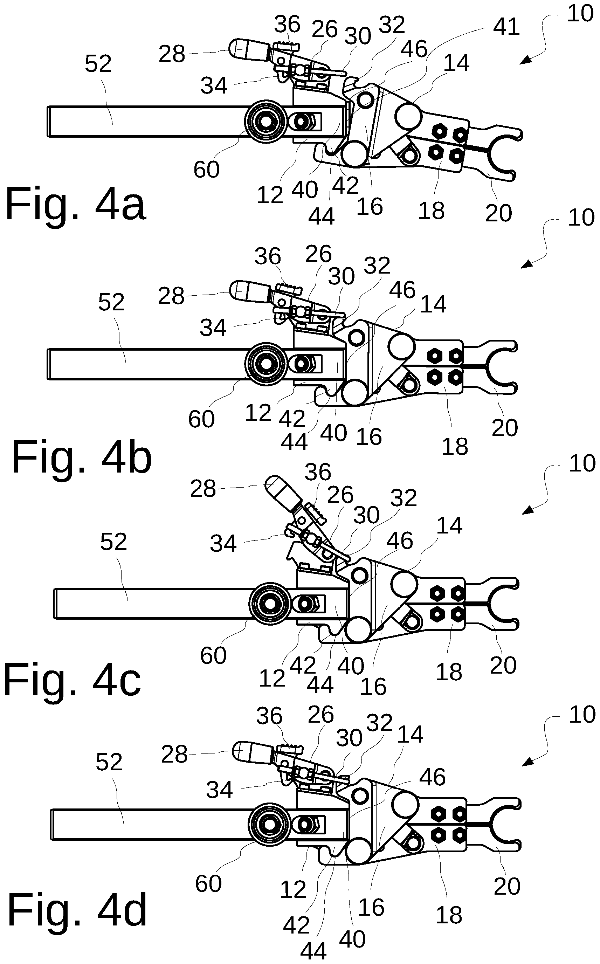

In den Figuren 4a bis 4d ist am Beispiel des Zangen-Systems 10 der Figuren 2, 3a und 3b dargestellt, wie das Zangenmodul 14 mit dem Zangenmodulträger 12 verbunden werden kann.

Gemäß Figur 4a wird das Zangenmodul 14 zunächst verkippt an den Zangenmodulträger 12 herangeführt und mit der Ausnehmung 44 über den Vorsprung 42 angeordnet. Das Ende der Zangenbasis 16, das auf der anderen Seite des Tragarms 52 angeordnet ist und den Haken 32 aufweist, weist dabei ein Abstand zu der Arretiervorrichtung 26 auf.

Das Zangenmodul 14 wird mit dem Ende der Zangenbasis 16, an dem der Haken 32 angeordnet ist, zum Tragarm 52 verschwenkt.

Dies ist in Figur 4b dargestellt. Dabei ist der Haken in Kontakt mit der Schlaufe. In dieser Position oder bereits vorher wird der Daumenhebel 36 betätigt, um das Verriegelungselement 34 von der Verriegelungsstellung in die Entriegelungsstellung zu bringen. Die Verriegelung in der Verriegelungsstellung erfolgt dabei über einen weiteren Haken, der mit dem Daumenhebel verbunden ist und der an der Arretiervorrichtung 26 eingehakt wird. Durch die Betätigung des Daumenhebels 36 wird dieser Haken ausgehakt. Wenn das Verriegelungselement 34 in der Entriegelungsstellung ist, kann der Spannhebel 28 verschwenkt werden.

Figur 4c zeigt den verschwenkten Spannhebel 28. In dieser Stellung kann die Schlaufe eingehakt werden. Bei einer Rückführung des Spannhebels 28 in die Arretierstellung zieht die Schlaufe den Haken an die Arretiervorrichtung 26, sodass das Zangenmodul 14 an den Zangenmodulträger 12 gedrückt wird. Dies bewirkt eine Verspannung des Zangenmoduls 14 an dem Zangenmodulträger 12.

Dabei ist in Figur 4d dargestellt, dass das Verriegelungselement 34 wieder in die Verriegelungsstellung bewegt wird, sobald der Spannhebel 28 in der Arretierstellung ist. Das Zangenmodul 14 kann damit mit wenigen Handgriffen in weniger als 15 Sekunden spielfrei an dem Zangenmodulträger 12 befestigt oder von dem Zangenmodulträger 12 gelöst werden.

Zum Lösen des Zangenmoduls 14 von dem Zangenmodulträger 12 wird in umgekehrter Reihenfolge vorgegangen. Dabei wird zuerst der Daumenhebel 36 betätigt, um das Verriegelungselement 34 in die Entriegelungsstellung zu bringen. Danach kann der Spannhebel 28 verschwenkt werden, um die Arretiervorrichtung 26 in die Freigabestellung zu bewegen, sodass die Schlaufe von dem Haken ausgehakt werden kann. Darauf wird das Zangenmodul 14 mit dem Haken von der Schlaufe weg verschwenkt, wobei das Zangenmodul 14 an der Position der Ausnehmung 44 weiter in Kontakt mit dem Zangenmodulträger 12 bleibt. Nach einem Verschwenken des Zangenmoduls 14 kann das Zangenmodul 14 auch an der Position der Ausnehmung 44 von dem Zangenmodulträger 12 getrennt werden.

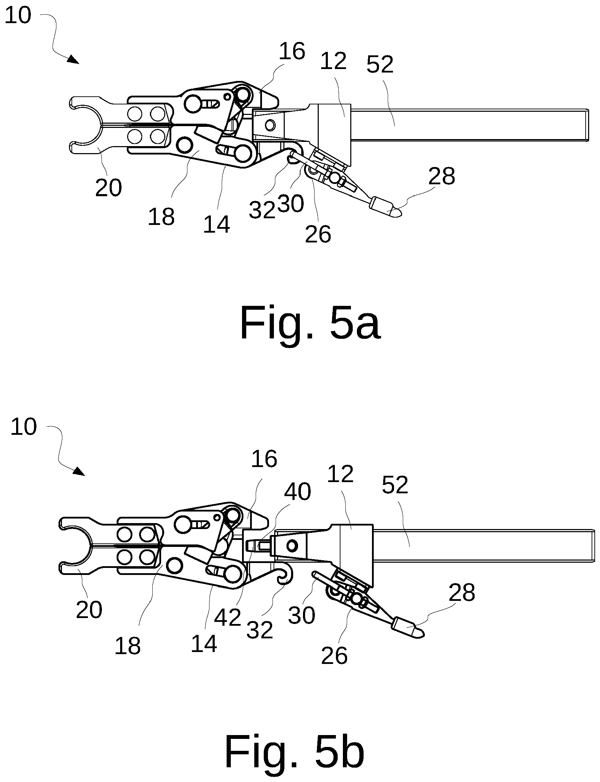

Die Figuren 5a und 5b zeigen ein alternatives Ausführungsbeispiel des Zangen-Systems 10. In diesem Ausführungsbeispiel bezeichnen Bezugszeichen des vorher beschriebenen Ausführungsbeispiels gleiche Komponenten.

Im Unterschied zu dem in der vorangegangenen Beschreibung erläuterten Ausführungsbeispiel weist das Ausführungsbeispiel gemäß Figur 5a und 5b kein Verriegelungselement an der Arretiervorrichtung 26 auf. Der Spannhebel 28 kann zum Beispiel in der Arretierstellung, die in Figur 5a dargestellt ist, durch die in der Arretierstellung wirkende Vorspannung in Position gehalten werden. Die Vorspannung entsteht hierbei durch den Zug, den der Spannhebel 28 mittels der Schlaufe auf den Haken in der Arretierstellung auf das Zangenmodul 14 bewirkt.

Gemäß Figur 5b erfasst das Zangen-System 10 weiter ein Zentrierelement 40, das als Vorsprung 42 ausgebildet ist, wobei sich der Vorsprung 42 entlang einer Längsachse des Zangenmodulträgers 12 erstreckt. Das Zangenmodul 14 weist dazu eine Ausnehmung in der Zangenbasis 16 auf, die passend zu dem Vorsprung 42 ausgebildet ist, sodass der Vorsprung 42 in dieser Ausnehmung eingeführt werden kann.

Zum Aufsetzen des Zangenmoduls 14 auf den Zangenmodulträger 12 wird das Zangenmodul 14 entlang der Erstreckungsrichtung des Vorsprungs 42 auf den Zangenmodulträger 12 bzw. auf den Tragarm 52 aufgesetzt und mit dem Spannhebel 28 verspannt.

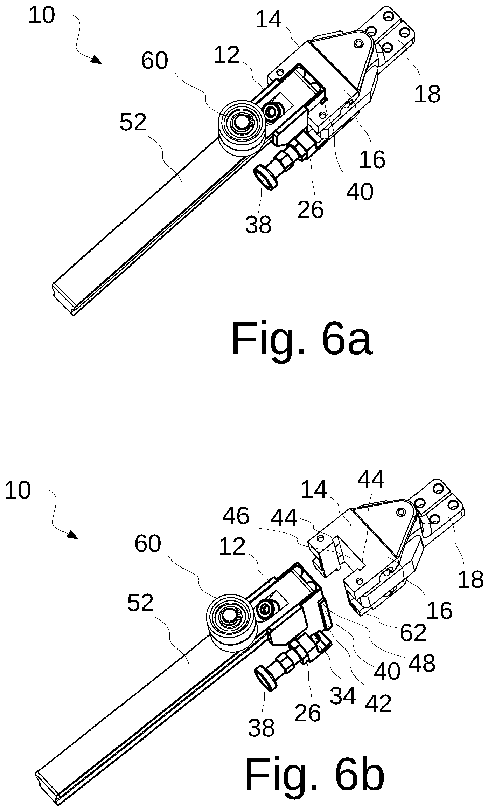

In den Figuren 6a und 6b wird ein weiteres alternatives Ausführungsbeispiel des Zangen-Systems 10 dargestellt.

Elemente, die mit dem Bezugszeichen aus den vorangegangenen Figuren bezeichnet sind, stellen gleiche Elemente dar. Die Greifelemente 20 sind in den Figuren 6a und 6b nicht dargestellt, können jedoch selbstverständlich mit den Zangenarmen 18 des Zangenmoduls 14 verbunden werden.

Im Unterschied zu den beiden vorhergehend erläuterten Ausführungsbeispielen umfasst das Ausführungsbeispiel der Figuren 6a und 6b eine Arretiervorrichtung 26 mit einem Rastbolzen 38. Figur 6a zeigt dabei die Arretierstellung der Arretiervorrichtung 26. Um die Arretiervorrichtung 26 von der Arretierstellung in die Freigabestellung zu bewegen, kann der Rastbolzen 38 von dem Zangenmodul 14 wegbewegt werden. Der Rastbolzen 38 kann dabei optional ein Federelement aufweisen, das den Rastbolzen 38 zurück in die Arretierstellung zieht, wenn keine äußeren Kräfte auf den Rastbolzen 38 wirken.

In Figur 6b sind das Zangenmodul 14 und der Zangenmodulträger 12 voneinander getrennt. Hierbei ist das Zentrierelement 40 zu sehen, das als Vorsprung 42 seitlich aus dem Zangenmodulträger 12 herausragt. Die Vorsprünge 42 bilden dabei Führungsschienen 48. Das Zangenmodul 14 umfasst dazu eine Ausnehmung 44, die passend zu den Führungsschienen 48 ausgebildet ist. Die Ausnehmungen 44 sind dazu ausgebildet, entlang der Führungsschienen 48 bewegt zu werden.

Weiter umfasst das Zangenmodul 14 eine Bohrung 62, die passend zu einem Endstück des Rastbolzens 38 ausgebildet ist. Die Bohrung 62 kann das Endstück des Rastbolzens 38 aufnehmen.

Um das Zangenmodul 14 mit dem Zangenmodulträger 12 zu verbinden, wird das Zangenmodul 14 mit den Ausnehmungen 44 über die Führungsschienen 48 angeordnet. Dabei sind das Zangenmodul 14 und der Zangenmodulträger 12 zunächst seitlich versetzt zueinander angeordnet. Das Zangenmodul 14 wird dann mit den Ausnehmungen 44 entlang der Führungsschienen 48 bewegt, bis die Führung 62 mit dem Rastbolzen 38 fluchtet. Um dies zu bewirken, kann der Rastbolzen 38 zunächst in die Freigabestellung bewegt werden. Sobald die Bohrung 62 mit dem Rastbolzen 38 fluchtet, wird der Rastbolzen 38 in die Arretierstellung überführt. In der Arretierstellung verriegelt der Rastbolzen 38 mit seinem als Verriegelungselement 34 fungierenden Endstück die Arretiervorrichtung 26 in der Arretierstellung.

### Bezugszeichenliste

- 10: Zangen-System
- 12: Zangenmodulträger
- 14: Zangenmodul
- 16: Zangenbasis
- 18: Zangenarm
- 20: Greifelement
- 22: Werkstück
- 24: Halsbereich
- 26: Spannvorrichtung
- 28: Spannhebel
- 30: Schlaufenelement
- 32: Hakenelement
- 34: Verriegelungselement
- 36: Daumenhebel
- 38: Rastbolzen
- 40: Positioniereinrichtung
- 41: Zentrierelement
- 42: Vorsprung
- 43: Ausnehmung
- 44: Ausnehmung
- 46: Aufnahme
- 48: Führungsschiene
- 50: Vorrichtung zum Transportieren
- 52: Tragarm
- 53: Halteelement
- 54: Vorrichtung zum Herstellen
- 56: Formvorrichtung
- 58: Reckelement
- 60: Laufrolle
- 61: Laufrolle
- 62: Bohrung

## Patentansprüche

1. Zangen-System umfassend einen Zangenmodulträger (12) und ein Zangenmodul (14) zur Halterung von Werkstücken (22), insbesondere von Behältern oder Behälter-Vorformlingen, wobei das Zangenmodul (14) eine Zangenbasis (16) und zwei relativ zueinander schwenkbar an der Zangenbasis (16) gelagerte Zangenarme (18) mit Greifelementen (20) zum zumindest teilweisen Umgreifen eines Haltebereiches (24) von Behältern oder Behälter-Vorformlingen aufweist, wobei das Zangenmodul (14) lösbar mit dem Zangenmodulträger (12) verbindbar ist, wobei das Zangen-System (10) weiter eine Arretiervorrichtung (26) zum Arretieren des Zangenmoduls (14) an dem Zangenmodulträger (12) aufweist, wobei die Arretiervorrichtung (26) in eine Arretierstellung zur Arretierung des Zangenmoduls (14) an dem Zangenmodulträger (12) bringbar ist, und wobei die Arretiervorrichtung (26) in eine Freigabestellung bringbar ist, zur Freigabe des Zangenmoduls (14) aus der Arretierung an dem Zangenmodulträger (12), **dadurch gekennzeichnet, dass** die Arretiervorrichtung (26) einen Spannhebel (28) umfasst, der zur Betätigung der Arretiervorrichtung (26) in die Arretierstellung und die Freigabestellung schwenkbar ist.

2. Zangen-System nach Anspruch 1, **dadurch gekennzeichnet, dass** die Arretiervorrichtung (26) werkzeuglos in die Arretierstellung und in die Freigabestellung bringbar ist.

3. Zangen-System nach Anspruch 1 oder 2, **dadurch gekennzeichnet, dass** die Arretiervorrichtung einen nach dem Kniehebelprinzip arretierenden Verschlussmechanismus aufweist.

4. Zangen-System nach einem der Ansprüche 1 bis 3, **dadurch gekennzeichnet, dass** die Arretiervorrichtung (26) als Spannverschluss ausgebildet ist.

5. Zangen-System nach einem der vorangegangenen Ansprüche, **dadurch gekennzeichnet, dass** die Arretiervorrichtung einen, insbesondere als Haken, Bügel oder Schlaufe ausgebildeten, zugfest mit dem Zangenmodulträger (12) oder mit dem Zangenmodul (14) verbundenen ersten Haltepartner (30) und einen passend zum ersten Haltepartner (30), insbesondere als Haken, Schlaufe oder Bügel ausgebildeten, zugfest mit dem Zangenmodul (14) oder mit dem Zangenmodulträger (12) verbundenen zweiten Haltepartner (32) aufweist, wobei der erste Haltepartner (30) und der zweite Haltepartner (32) in der Arretierstellung zur Herstellung einer zugfesten Verbindung formschlüssig zusammenwirken, und in der Freigabestellung voneinander gelöst sind.

6. Zangen-System nach Anspruch 5, **dadurch gekennzeichnet, dass** der Spannhebel (28) sowie der erste Haltepartner (30) mit dem Zangenmodulträger (12) verbunden sind, und dass der zweite Haltepartner (32) mit dem Zangenmodul (14) verbunden ist.

7. Zangen-System nach einem der vorangegangenen Ansprüche, **dadurch gekennzeichnet, dass** die Arretiervorrichtung (26) ein in eine Verriegelungsstellung und in eine Entriegelungsstellung bringbares Verriegelungselement (34) aufweist, wobei das Verriegelungselement (34) in der Verriegelungsstellung die Arretiervorrichtung (26) in der Arretierstellung verriegelt und in der Entriegelungsstellung die Arretiervorrichtung (26) entriegelt, so dass die Arretiervorrichtung (26) aus der Arretierstellung in die Freigabestellung bringbar ist.

8. Zangen-System nach Anspruch 7, **dadurch gekennzeichnet, dass** das Verriegelungselement (34) einen Daumenhebel (36) zum Bewegen des Verriegelungselements zwischen der Verriegelungsstellung und der Entriegelungsstellung aufweist.

9. Zangen-System umfassend einen von einem Tragarm (52) gehaltenen Zangenmodulträger (12) und ein Zangenmodul (14) zur Halterung von Werkstücken (22), insbesondere von Behältern oder Behälter-Vorformlingen, wobei das Zangenmodul (14) eine Zangenbasis (16) und zwei relativ zueinander schwenkbar an der Zangenbasis (16) gelagerte Zangenarme (18) mit Greifelementen (20) zum zumindest teilweisen Umgreifen eines Haltebereiches (24) von Behältern oder Behälter-Vorformlingen aufweist, wobei das Zangenmodul (14) lösbar mit dem Zangenmodulträger (12) verbindbar ist, wobei das Zangen-System (10) weiter eine Arretiervorrichtung (26) zum Arretieren des Zangenmoduls (14) an dem Zangenmodulträger (12) aufweist, wobei die Arretiervorrichtung (26) in eine Arretierstellung zur Arretierung des Zangenmoduls (14) an dem Zangenmodulträger (12) bringbar ist, und wobei die Arretiervorrichtung (26) in eine Freigabestellung bringbar ist, zur Freigabe des Zangenmoduls (14) aus der Arretierung an dem Zangenmodulträger (12), **dadurch gekennzeichnet, dass** die Arretiervorrichtung (26) einen Rastbolzen (38) umfasst, der zur Betätigung der Arretiervorrichtung (26) in die Arretierstellung und die Freigabestellung bewegbar ist.

10. Zangen-System nach Anspruch 9, **dadurch gekennzeichnet, dass** der Rastbolzen (38) an dem Zangenmodulträger (12) oder dem Zangenmodul (14) verschiebbar gelagert ist und sich in der Arretierstellung in eine Bohrung (62), die am Zangenmodul (14) oder am Zangenmodulträger (12) angeordnet ist, erstreckt, um das Zangenmodul (14) formschlüssig an dem Zangenmodulträger (12) zu arretieren.

11. Zangen-System nach Anspruch 9 oder 10, **dadurch gekennzeichnet, dass** die Arretiervorrichtung (26) ein Federelement aufweist, das den Rastbolzen (38) federvorgespannt in die Arretierstellung zwingt.

12. Zangen-System nach einem der vorangegangenen Ansprüche, **dadurch gekennzeichnet, dass** das Zangen-System (10) mindestens eine Positioniereinrichtung (40) zum Ausrichten des Zangenmoduls (14) an dem Zangenmodulträger (12) aufweist.

13. Zangen-System nach Anspruch 12, **dadurch gekennzeichnet, dass** die Positioniereinrichtung (40) mindestens einen Vorsprung (42) und mindestens eine zu dem mindestens einen Vorsprung (42) passend ausgebildete Ausnehmung (44) zum Aufnehmen des Vorsprungs aufweist, wobei der Vorsprung (42) an dem Zangenmodulträger (12) oder dem Zangenmodul (14) befestigt ist und die Ausnehmung (44) an dem Zangenmodul (14) oder dem Zangenmodulträger (12) angeordnet ist.

14. Zangen-System nach Anspruch 12 oder 13, **dadurch gekennzeichnet, dass** die mindestens eine Positioniereinrichtung (40) weiter ein Zentrierelement (41) zum Zentrieren des Zangenmoduls (14) an dem Zangenmodulträger (12) aufweist.

15. Vorrichtung (50) zum Transportieren eines Behälters oder Behälter-Vorformlings, wobei die Vorrichtung mindestens ein Zangen-System (10) nach einem der vorangegangenen Ansprüche aufweist.

## Claims

1. Gripper system comprising a gripper module carrier (12) and a gripper module (14) for holding workpieces (22), in particular containers or container preforms, the gripper module (14) having a gripper base (16) and two gripper arms (18) with gripping elements (20) for at least partially gripping around a holding region (24) of containers or container preforms, the gripper arms being mounted on the gripper base (16) such that they can pivot relative to one another, the gripper module (14) being releasably connected to the gripper module carrier (12), wherein the gripper system (10) further comprises a locking device (26) for locking the gripper module (14) to the gripper module carrier (12), wherein the locking device (26) is movable into a locking position for locking the gripper module (14) to the gripper module carrier (12), and wherein the locking device (26) is movable into a release position for releasing the gripper module (14) from the locking on the gripper module carrier (12), **characterized in that** the locking device (26) comprises a tension lever (28) being pivotable into the locking position and the release position for actuating the locking device (26).

2. Gripper system according to claim 1, **characterized in that** the locking device (26) is movable into the locking position and into the release position without tools.

3. Gripper system according to claim 1 or 2, **characterized in that** the locking device comprises a locking mechanism which locks according to the toggle principle.

4. Gripper system according to any one of claims 1 to 3, **characterized in that** the locking device (26) may be a tension lock.

5. Gripper system according to one of the preceding claims, **characterized in that** the locking device has a first holding partner (30), in particular in the form of a hook, bracket or loop, and a second holding partner (32), in particular in the form of a hook, bracket or loop, the first holding partner being connected to the gripper module carrier (12) or to the gripper module (14) in a tension-proof manner, the second holding partner being designed in a matching manner to the first holding partner (30) and being connected to the gripper module (14) or to the gripper module carrier (12) in a tension-proof manner, the first holding partner (30) and the second holding partner (32) interacting in a form-fitting manner in the locking position for providing a tension-proof connection, and being released from one another in the release position.

6. Gripper system according to claim 5, **characterized in that** the tension lever (28) as well as the first holding partner (30) are connected to the gripper module carrier (12), and that the second holding partner (32) is connected to the gripper module (14) .

7. Gripper system according to any one of the preceding claims, **characterized in that** the locking device (26) comprises a latching element (34) which is movable into a latching position and into an unlatching position, wherein, in the latching position, the latching element (34) latches the locking device (26) in the locking position and, in the unlatching position, unlocks the locking device (26), such that the locking device (26) is movable from the locking position into the release position.

8. Gripper system of claim 7, **characterized in that** the latching member (34) comprises a thumb lever (36) for moving the latching member between the latching position and the unlatching position.

9. Gripper system comprising a gripper module carrier (12) held by a carrier arm (52) and a gripper module (14) for holding workpieces (22), in particular containers or container preforms, the gripper module (14) having a gripper base (16) and two gripper arms (18) with gripping elements (20) for at least partially gripping around a holding region (24) of containers or container preforms, the gripper arms being mounted on the gripper base (16) such that they can pivot relative to one another, the gripper module (14) being releasably connected to the gripper module carrier (12), wherein the gripper system (10) further comprises a locking device (26) for locking the gripper module (14) to the gripper module carrier (12), wherein the locking device (26) is movable into a locking position for locking the gripper module (14) to the gripper module carrier (12), and wherein the locking device (26) is movable into a release position for releasing the gripper module (14) from the locking on the gripper module carrier (12), **characterized in that** the locking device (26) comprises a detent pin (38) being movable into the locking position and the release position for actuating the locking device (26).

10. Gripper system according to claim 9, **characterized in that** the detent pin (38) is displaceably mounted on the gripper module carrier (12) or the gripper module (14) and, in the locking position, extends into a bore (62) arranged on the gripper module (14) or on the gripper module carrier (12) to lock the gripper module (14) to the gripper module carrier (12) in a form-fitting manner.

11. Gripper system according to claim 9 or 10, **characterized in that** the locking device (26) comprises a spring element which forces the detent bolt (38) into the locking position under spring-bias.

12. Gripper system according to any one of the preceding claims, **characterized in that** the gripper system (10) comprises at least one positioning device (40) for aligning the gripper module (14) to the gripper module carrier (12).

13. Gripper system of claim 12, **characterized in that** the positioning device (40) comprises at least one protrusion (42) and at least one recess (44) configured to mate with the at least one protrusion (42) for receiving the protrusion, the protrusion (42) being attached to the gripper module carrier (12) or the gripper module (14), wherein the recess (44) is disposed on the gripper module (14) or the gripper module carrier (12).

14. Gripper system according to claim 12 or 13, **characterized in that** said at least one positioning device (40) further comprises a centering element (41) for centering said gripper module (14) on the gripper module carrier (12).

15. Transport device (50) for a container or container preform, the transport device comprising at least one gripper system (10) according to any one of the preceding claims.

## Revendications

1. Système préhenseur comprenant un support de module préhenseur (12) et un module préhenseur (14) pour le maintien de pièces ouvrées (22), en particulier de récipients ou de préformes de récipients, le module préhenseur (14) présentant une base préhenseur (16) et deux bras préhenseur (18) logés de manière pivotante l'un par rapport à l'autre sur la base préhenseur (16) avec des éléments de préhension (20) pour entourer au moins partiellement une zone de maintien (24) de récipients ou de préformes de récipients, le module préhenseur (14) pouvant être relié de manière amovible au support de module préhenseur (12), le système préhenseur (10) présentant en outre un dispositif d'arrêt (26) pour bloquer le module préhenseur (14) sur le support de module préhenseur (12), le dispositif d'arrêt (26) pouvant être amené dans une position d'arrêt pour bloquer le module préhenseur (14) sur le support de module préhenseur (12), et le dispositif d'arrêt (26) pouvant être amené dans une position de libération, pour libérer le module préhenseur (14) de son arrêt sur le support de module préhenseur (12), **caractérisé en ce que** le dispositif d'arrêt (26) comprend un levier de serrage (28) qui peut pivoter dans la position d'arrêt et dans la position de libération pour actionner le dispositif d'arrêt (26) .

2. Système préhenseur selon la revendication 1, **caractérisé en ce que** le dispositif d'arrêt (26) peut être amené sans outil dans la position d'arrêt et dans la position de libération.

3. Système préhenseur selon la revendication 1 ou 2, **caractérisé en ce que** le dispositif d'arrêt présente un mécanisme de fermeture s'arrêtant selon le principe de la genouillère.

4. Système préhenseur selon l'une des revendications 1 à 3, **caractérisé en ce que** le dispositif d'arrêt (26) est conçu comme une fermeture à serrage.

5. Système préhenseur selon l'une des revendications précédentes, **caractérisé en ce que** le dispositif d'arrêt comprend un premier partenaire de maintien (30), en particulier sous forme de crochet, d'étrier ou de boucle, relié de manière résistante à la traction au support de module préhenseur (12) ou au module préhenseur (14), et un deuxième partenaire de maintien (32) adapté au premier partenaire de maintien (30), en particulier sous forme de crochet, le premier partenaire de maintien (30) et le deuxième partenaire de maintien (32) coopérant par complémentarité de formes dans la position d'arrêt pour réaliser une liaison résistante à la traction, et étant détachés l'un de l'autre dans la position de libération.

6. Système préhenseur selon la revendication 5, **caractérisé en ce que** le levier de serrage (28) ainsi que le premier partenaire de maintien (30) sont reliés au support de module préhenseur (12), et **en ce que** le deuxième partenaire de maintien (32) est relié au module préhenseur (14).

7. Système préhenseur selon l'une des revendications précédentes, **caractérisé en ce que** le dispositif d'arrêt (26) présente un élément de verrouillage (34) pouvant être amené dans une position de verrouillage et dans une position de déverrouillage, l'élément de verrouillage (34), dans la position de verrouillage, verrouillant le dispositif d'arrêt (26) dans la position d'arrêt et, dans la position de déverrouillage, déverrouillant le dispositif d'arrêt (26), de sorte que le dispositif d'arrêt (26) peut être amené de la position d'arrêt dans la position de libération.

8. Système préhenseur selon la revendication 7, **caractérisé en ce que** l'élément de verrouillage (34) comprend un levier de pouce (36) pour déplacer l'élément de verrouillage entre la position de verrouillage et la position de déverrouillage.

9. Système préhenseur comprenant un support de module préhenseur (12) maintenu par un bras porteur (52) et un module préhenseur (14) pour le maintien de pièces ouvrées (22), en particulier de récipients ou de préformes de récipients, le module préhenseur (14) présentant une base préhenseur (16) et deux bras préhenseur (18) logés de manière pivotante l'un par rapport à l'autre sur la base préhenseur (16) avec des éléments de préhension (20) pour entourer au moins partiellement une zone de maintien (24) de récipients ou de préformes de récipients, le module préhenseur (14) pouvant être relié de manière amovible au support de module préhenseur (12), le système préhenseur (10) présentant en outre un dispositif d'arrêt (26) pour arrêter le module préhenseur (14) sur le support de module préhenseur (12), le dispositif d'arrêt (26) pouvant être amené dans une position d'arrêt pour arrêter le module préhenseur (14) sur le support de module préhenseur (12), et le dispositif d'arrêt (26) pouvant être amené dans une position de libération, pour libérer le module préhenseur (14) de son arrêt sur le support de module préhenseur (12), **caractérisé en ce que** le dispositif d'arrêt (26) comprend un boulon d'arrêt (38) qui peut être déplacé dans la position d'arrêt et dans la position de libération pour actionner le dispositif d'arrêt (26).

10. Système préhenseur selon la revendication 9, **caractérisé en ce que** le boulon d'arrêt (38) est monté coulissant sur le support de module préhenseur (12) ou sur le module préhenseur (14) et s'étend, dans la position d'arrêt, dans un alésage (62) qui est disposé sur le module préhenseur (14) ou sur le support de module préhenseur (12), afin d'arrêter le module préhenseur (14) par complémentarité de forme sur le support de module préhenseur (12).

11. Système préhenseur selon la revendication 9 ou 10, **caractérisé en ce que** le dispositif d'arrêt (26) présente un élément à ressort qui force le boulon d'arrêt (38) dans la position d'arrêt en étant précontraint par un ressort.

12. Système préhenseur selon l'une des revendications précédentes, **caractérisé en ce que** le système préhenseur (10) comporte au moins un dispositif de positionnement (40) pour aligner le module préhenseur (14) sur le support de module préhenseur (12).

13. Système préhenseur selon la revendication 12, **caractérisé en ce que** le dispositif de positionnement (40) présente au moins une saillie (42) et au moins un évidement (44) formé de manière à s'adapter à la au moins une saillie (42) pour recevoir la saillie, la saillie (42) étant fixée au support de module préhenseur (12) ou au module préhenseur (14) et l'évidement (44) étant disposé sur le module préhenseur (14) ou le support de module préhenseur (12).

14. Système préhenseur selon la revendication 12 ou 13, **caractérisé en ce que** le au moins un dispositif de positionnement (40) comprend en outre un élément de centrage (41) pour centrer le module préhenseur (14) sur le support de module préhenseur (12).

15. Dispositif (50) de transport d'un récipient ou d'une préforme de récipient, le dispositif comprenant au moins un système préhenseur (10) selon l'une des revendications précédentes.
